(19) Europäisches Patentamt
European Patent Office
Office européen des brevets

(11) **EP 4 386 669 A1**

(12) **EUROPEAN PATENT APPLICATION**

(43) Date of publication:
**19.06.2024 Bulletin 2024/25**

(21) Application number: **22212885.2**

(22) Date of filing: **12.12.2022**

(51) International Patent Classification (IPC):
**G06T 7/20** *(2017.01)*       **G06T 5/00** *(2024.01)*

(52) Cooperative Patent Classification (CPC):
**G06T 7/20; G06T 5/73;** G06T 2207/10016;
G06T 2207/10072; G06T 2207/10132;
G06T 2207/20081; G06T 2207/20084;
G06T 2207/20201; G06T 2207/30056

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventors:
• **PEZZOTTI, Nicola**
  **Eindhoven (NL)**
• **NIELSEN, Tim**
  **Eindhoven (NL)**
• **GESSERT, Nils Thorben**
  **5656AG Eindhoven (NL)**

(74) Representative: **Philips Intellectual Property &
Standards
High Tech Campus 52
5656 AG Eindhoven (NL)**

(54) **MOTION CORRECTION OF IMAGE DATA**

(57)    A computer-implemented method for registration of image data comprising a plurality of voxels relating to an image coordinate and a time point; the method comprising optimizing a parametric function by optimizing an optimization term, wherein the optimization term comprises a difference between the voxel value at a first image coordinate and at a first time point corresponding to a first image frame, and the voxel value at a second image coordinate, obtained by adding a motion vector to the first image coordinate, at a second time point corresponding to a second image frame, wherein the added motion vector is the output of the parametric function when inputting the first image coordinate, and wherein the parametric function is optimized by calculating the optimization term for a plurality of voxels at the first and second time points and iteratively adapting the parametric function.

FIG. 1

**Description**

FIELD OF THE INVENTION

The invention relates to a method for motion correction of image data, in particular medical image data, a non-transient computer-readable medium having stored thereon a corresponding computer program, and a processing unit being configured to carry out the method.

BACKGROUND OF THE INVENTION

In imaging, in particular in medical imaging, occurrence of motion can be a key issue for several applications. For example, the internal organs of a patient are naturally subject to motion, e.g., due to breathing and/or bowel movement. Furthermore, in particular during longer acquisition times, involuntary movement of the patient may occur. Such movement during the acquisition of a medical image or during the acquisition of a sequence of images may negatively impact the quality of the resulting image(s) or even render the image(s) useless for diagnostic purposes. Motion artifacts may, for example, be problematic for diagnosing diseases and keeping track of their progression over time. Hence it is often important to apply a motion correction, e.g., when the progression of a certain disease, such as a tumour is assessed. Additionally, e.g., in an interventional setting, the ability to effectively track the motion of the organs may enable to apply a better treatment, such as a radiotherapy treatment. The process of transforming and/or adjusting different image frames to one another is usually referred to as image registration, in the following also abbreviated as "registration". For example, a reference frame is chosen and one or several further image frames, showing the same or similar object, are adjusted such that they match the reference frame thereby correcting artifacts such as artifacts caused by motion. In order to also address varying motion within the image frames, e.g., a moving organ together with a mostly non-moving background, non-rigid registration methods may be applied, wherein the adjusted image frame(s) may be locally warped to match the reference frame. A function defining the adjustment of the image frames may be called a motion field or motion vector field.

There are existing non-rigid registration methods that require, for the definition of a motion field, to define a notion of landmarks to be aligned in the image. However, the automatic definition of such landmarks is difficult. For example, if the number of landmarks that are defined is not sufficient, such methods may fail in registering the different images. On the other hand, if too many landmarks are identified, such methods tend to interpret noise as landmarks. This may particularly lead to sub-optimal results, if the registration is performed to obtain superior image quality by averaging multiple acquisitions. Another possible disadvantage of these existing methods is the trade-off between good registration of moving parts (e.g., lungs) and neighbouring fixed anatomical features (e.g., a spine). It is often observed that correction of the moving anatomy comes at the expense of the stability of the fixed one, and the other way around.

OBJECT OF THE INVENTION

It is, therefore, an object of the invention to provide a method for image correction that improves on at least some of the above-mentioned problems, in particular by providing a more reliable motion correction.

SUMMARY OF THE INVENTION

To better address this object, a method according to claim 1, a non-transient computer-readable medium according to claim 14 and a processing unit according to claim 15 is provided. Advantageous embodiments are set out in the dependent claims. Any features, advantages or alternative embodiments described herein in relation to the claimed method are also applicable to the other claim categories and vice versa.

According to a first aspect, a computer-implemented method for non-rigid registration of at least two image frames of an object with one another by estimating one or several motion vector field(s) describing the displacement between two of the image frames is provided, the method comprising the steps of:

(a) providing image data comprising a plurality of voxels, each voxel comprising a voxel value relating to an image coordinate and a time point, wherein a first time point corresponds to a first image frame and a second time point corresponds to a second image frame,
(b) generating an initial parametric function, wherein the input of the parametric function is one image coordinate and optionally two time points, and the output of the parametric function is a motion vector,
(c) optimizing the parametric function by optimizing an optimization term, wherein the optimization term comprises a difference between the voxel value at a first image coordinate and at the first time point, and the voxel value at a second image coordinate at the second time point, wherein the second image coordinate is obtained by adding a motion vector to the first image coordinate, wherein the added motion vector is the output of the parametric function when inputting the first image coordinate and optionally the first and second time point, and wherein the parametric function is optimized by calculating the optimization term for a plurality of voxels at the first and second time points and iteratively adapting the parametric function;

(d) generating a motion vector field by applying the optimized parametric function to a plurality or all of the image coordinates.

The method is described with respect to two image frames; however, the method may be performed with more than two image frames as well. In particular, the first image frame may be considered to be a reference frame, wherein the second image frame, and possible further image frames, are registered to the first image frame. The denotation "first" does not necessarily need to relate to a specific time or place the first image frame has been taken or to any other property of the first image frame. The first image frame may be the first image frame in a series of continuously taken image frames. However, the first image frame may, for example, also be chosen randomly or be a middle one of a series of image frames. The image data, in particular also the individual image frames, comprise voxels and voxel values. While voxels may generally be used in the context of three-dimensional (3D) image data, in the context of this invention, a voxel may also comprise a two-dimensional (2D) pixel. Voxel values may in particular describe the value of the image data at a specific image coordinate and a specific time point. The voxel value may for example be a colour value and/or a greyscale value.

The image coordinates are in particular coordinates describing the position of the voxels within the image frames, for example within a 2D or 3D image matrix. The time points may describe the time a particular voxel was measured at. In particular, the time points may correspond to the (individual) image frames, e.g., such that each time point corresponds to one image frame. Additionally, and/or alternatively, at least some different time points may be assigned to different voxels within one image frame. A motion vector may in particular be a vector that describes an offset or displacement of a part of an image frame, e.g., a voxel between the first and second image frames, caused e.g., by movement. The motion vector field, also denoted as motion field herein, may in particular comprise several motion vectors relating to the image coordinates. The motion vector field may for example be a matrix. In the following, a motion vector may be denoted by $\mathbf{m}$, in particular being a three-dimensional vector $\mathbf{m} \in R^3$, describing the displacement of a voxel between first and second time points. $\mathbf{m}$ may also be a two-dimensional vector $\mathbf{m} \in R^2$. The parametric function comprises in particular a plurality, typically > 1000, adjustable parameters (herein usually denoted by $\theta$). The parametric function may in particular be of the form $f_\theta(x, y, z, t_0, t_1)$, where $x,y,z$ are the image coordinates which may be represented by a vector $\mathbf{c} \in R^3$ and $t_0, t_1$ are the time points. In this disclosure, $t_0, t_1$ and t0, t1 may be used interchangeably, which may also apply to other variables comprising indices. The first and second image frame may be referred to as $I_0$ and $I_1$, corresponding to the time steps $t_0, t_1$. In the context of this invention, the "initial parametric function" may be defined such, that the parameter(s) is/are (initially) set to a predefined or randomly chosen parameter or set of parameters. When choosing the initial parameter(s) randomly, the range of values of the parameters may be limited to a predefined limited range. Preferably, the parameter(s) may be limited to be relatively small, e.g., smaller than average optimized parameters that are usually calculated during the optimization step of this method. The parametric function is in particular configured such that it converts input image coordinates into output components of the motion vector. Optionally, the input may comprise the first and second time points. Inputting the time points may be used to assign the input image coordinates to pairs of time points and/or two particular image frames, such as the first and the second image frame and possibly the first and further image frames. This may be helpful when more than two image frames, corresponding in particular to more than two time points, are to be registered. An input of time points may in particular not be needed when the image data only comprise two image frames and two time points, such as the first time point corresponding to the first image frame and the second time point corresponding to the second image frame. Optimizing the parametric function may comprise adjusting the parameter(s) of the parametric function such that the optimization term is optimized according to a predefined optimization rule. Optimizing may in particular comprise calculating the output of the parametric function and calculating the optimization term with the output of the parametric function and iteratively adjusting the parameter(s) of the parametric function to optimize the optimization term. During optimization, the image coordinates to be input may be repeatedly chosen randomly, preferably until all image coordinates have been input at least once. In other words, the step of optimizing the parametric function may be repeated multiple times for different image coordinates, wherein optimizing may be repeated preferably so many times that it is carried out at least once for each voxel value. For example, the optimization term may be minimized. In particular the difference between the first image frame and the second image frame, the second image frame's voxels being displaced by the motion vector, may be minimized when optimizing the optimization term. The optimization may be carried out for a plurality of the image coordinates and voxels of the first and second image frame, preferably for all of the image coordinates and voxels of the first and second image frame. Optimization may be carried out for multiple pairs of image frames, preferably pairs of the first image frame and one further image frame, respectively. In the end, a motion field may be generated via the optimized parametric function. Hence, motion vectors of the motion vector field may be generated by inputting image coordinates into the parametric function and using the respective output of the parametric function as generated motion vector. Preferably, one motion vector may be generated for most of the voxels, more preferably, for each voxel of all but one of the image frames, so that the motion field between each pair of images is generated.

Hence, according to the invention, a parameterized representation of the motion field, namely the parametric function may be adopted via the optimization step. Advantageously, the inventive method allows an image registration which is optimized for the individual image frames, allowing to efficiently optimize non-rigid registration without requiring setting of landmarks, which setting of landmarks might otherwise lead to unreliable results. Further, since the method allows an optimization of the position of individual voxels, the correction of moving objects does not have to come at the expense of the stability of fixed objects and vice versa. The inventive method may for example be used for and integrated in computer tomography (CT) systems, including spectral and C-arm interventional systems, as well as magnetic resonance (MR) systems, ultrasound systems, positron emission tomography (PET) systems and single-photon emission computed tomography (SPECT) and the evaluation of these system's measured data. It may also be used for the evaluation of invasive imaging modalities, such as optical coherence tomography (OCT) and intravascular ultrasound (IVUS). The method may further be generally used in medical image analysis applications and it may also be relevant for EDI/ICAP.

According to an embodiment, the parametric function is a neural network, in particular a neural network with a multi-layer perceptron (MLP) architecture, and wherein the step of optimizing the parametric function comprises training the neural network. The neural network may for example comprise 2 to 30, preferably 5 to 20, hidden layers. The neural network may for example comprise 32 to 2048, preferably 128 to 512, neurons per layer. In a specific example the neural network may comprise 10 hidden layers and 256 neurons per layer. A leaky ReLU (rectified linear unit or rectifier) may preferably be used as an activation function of the neural network. A leaky ReLU may help to avoid the occurrence of dead neurons. The weights of the neural network may in particular be the parameters of the parametric function. The neural network may preferably comprise more than a thousand weights. The neural network may be trained via the first and second image frame, wherein the input training data are the image coordinates and, optionally, the two time points. The neural network may be trained such that the output of the neural network, namely the motion vector, is compared to a target via calculating the optimization function with the motion vector and targeting an optimization, e.g., a minimization, of the optimization term. Advantageously, the neural network is thus trained during the optimization step by adjusting the neural network specifically to the image frames of the image data, i.e., the neural network is optimized for an individual case instead of generally training the neural network. This may lead to more reliably results compared to the case where the neural network is pre-trained with generic data and then applied to the image data to generate a motion vector. A pre-trained neural network may in particular have the disadvantage that it may not be generic enough to reliable adapt to the specific image data that is to be registered. Thus, this embodiment may provide a particularly reliable method of image registration while also using the advantages of neural network machine learning. The step of optimizing using the neural network may be accelerated via known acceleration techniques such as Instant Neural Graphics Primitives, see, e.g., https://github.com/NVlabs/instant-ngp. Instant neural graphics primitives and how to reduce their training and evaluation cost are, for example described by Müller, Thomas, et al. in "Instant neural graphics primitives with a multiresolution hash encoding." arXiv preprint arXiv:2201.05989 (2022). For example, in addition to trainable weight parameters, the neural network may comprise trainable encoding parameters, wherein an encoding is applied to the input of the neural network. Furthermore, a parallelization of multiple GPUs (graphics processing units) may be used to accelerate the optimization step. Training of the neural network may be done with standard libraries such as PyTorch or Tensorflow.

According to an embodiment, the neural network is trained during the optimizing step by a gradient descent method, wherein each parameter of the neural network is partially differentiated with respect to the optimization term in each iteration. Within the gradient descent method, the parameters of the neural network, in particular the weights, may be derived from a loss value, which is in particular the optimization term. This derivation may be repeated multiple times, in particular more than a thousand times. In particular a stochastic gradient descent method may be applied. Using a gradient descent method may lead to particularly stable and efficient convergence of the parameters. For example, the gradient descent method may be the Adam optimizer (see,e.g., D. Kingma and J. Ba, 2014: "Adam: A Method for Stochastic Optimization" arXiv: 1412.6980, June 2014).

According to an embodiment, when calculating the optimization term, the voxel value relating to the second image coordinate at the second time point is obtained by applying an interpolator function, wherein the interpolator function is configured to interpolate from the one or several voxel values of the voxels in the second image frame which are nearest to the image coordinate obtained by adding the motion vector to the first image coordinate. Accordingly, during the optimization step, the difference between the first and second voxel values may be calculated such that the second voxel value is an interpolated value. The interpolator function may be configured to interpolate an interpolated voxel value from a predetermined number of nearest voxel values. Preferably, the interpolation may be carried out with respect to at least two nearest voxel values for images, and four nearest voxels for volumes. For example, the interpolation may comprise averaging the voxel values of the predetermined number of nearest voxels, e.g., the three nearest voxel values. In other words, the nearest neighbours with respect to the image coordinate obtained by adding the motion vector to the first image coordinate may be used for the interpolation. The interpolator function may be configured to interpolate via an inverse distance weighting. Additionally, and/or alternatively, the interpolator function may be configured to apply a linear interpolation. In particular the interpolator function may be configured to apply a bilinear interpolation and/or an interpolation analogous to a bilinear interpolation. Using the interpolator function may lead to a more accurate estimation of voxel values. Alternatively, one may simply take the voxel value of the one nearest neighbour.

According to an embodiment, the optimization term comprises the absolute value of the difference between the voxel value relating to the first image coordinate at the first time point and the voxel value relating to the second image coordinate at the second time point, i.e., to the first image coordinate displaced by the motion vector. The absolute value may be used during the optimization step to determine the optimization. In particular, optimizing may comprise minimizing the absolute value. Accordingly, the absolute value may be a particularly easy and reliable way of minimizing the difference between the first frame and the second frame, e.g., by minimizing the absolute value some of the voxel values, preferably all of the voxel values.

According to an embodiment, the optimization term comprises a regularization term, in particular on the magnitude of the motion vector, wherein the regularization term preferably comprises a norm of the motion vector, in particular the L1 or L2 norm of the motion vector. The L1-Norm may in particular be $L1 = (I_0[c] - I_1[c + m])$. The L2 norm may in particular be $L2 = (|I_0[c] - I_1[c + m]|^2)^{1/2}$. For example, the optimization term may comprise the sum of the absolute of the difference between the voxels as described above and herein and the regularization term. Optimizing may comprise minimizing this sum. The regularization term may have the advantage that a divergence of the motion vector can be avoided, since such a divergence would also lead to a very large regularization term. Thus, advantageously, the magnitude of the motion field can be effectively limited, in particular when optimizing comprises minimizing the optimization term and/or the above-mentioned sum. The regularization term may be multiplied with a pre-factor $\alpha$, wherein $\alpha$ is in particular smaller than 1. Preferably, $\alpha$ is smaller than 0.001. Preferably, $\alpha$ is greater than 0,00001. For example, $\alpha$ may be $\alpha=0.0001$.

According to an embodiment, the optimization term is

$$|\mathbf{h}(t_0, \mathbf{c}) - \mathbf{h}(t_1, \mathbf{c} + \mathbf{m})|.$$

The optimization term may thus comprise the L1 loss between the first and second image frame for c, $t_0$, $t_1$. These c, $t_0$, $t_1$ may for example be selected randomly in order to impose the L1 loss between the first and second image frame. According to more specific embodiments the interpolation function and/or the regularization term may be also part of the optimization term, such that the optimization term may be

$$|\mathbf{h}(t_0, \mathbf{c}) - B(\mathbf{h}(t_1, \mathbf{c} + \mathbf{m}))| + \alpha R(\mathbf{m}),$$

or

$$|\mathbf{h}(t_0, \mathbf{c}) - \mathbf{h}(t_1, \mathbf{c} + \mathbf{m})| + \alpha R(\mathbf{m}),$$

or

$$|\mathbf{h}(t_0, \mathbf{c}) - B(\mathbf{h}(t_1, \mathbf{c} + \mathbf{m}))|.$$

Therein, $\alpha R(\mathbf{m})$ is a regularization term with a pre-factor $\alpha$, $\mathbf{h}$ describes the image data and/or the pixel value, e.g., a grey value, $t_0$ is the first time point, $t_1$ is the second time point, B is the interpolator function, $\mathbf{c}$ is a vector describing the image coordinates (x, y, z) and $\mathbf{m}$ is the motion vector and is the output of the parametric function $f_0$: $\mathbf{m} = f_\theta(c, t_0, t_1)$. $R(\mathbf{m})$ may in particular be a norm of the motion vector, e.g., the L1 or L2 norm. The vector c may be a three-dimensional vector, $c \in \mathbb{R}^3$. The motion vector $\mathbf{m}$ may be a three-dimensional vector, $m \in \mathbb{R}^3$. The optimization term may, in particular be optimized by minimizing it for all c, $t_0$, $t_1$ respectively, in order to determine the motion vector field. Thus, the parametric function may be trained such that, for each image coordinate c, it outputs a motion vector $\mathbf{m}$, wherein the m's of all image coordinates together form the motion field. Particularly, $\mathbf{h}$ may be an image function of the medical data, mapping an image coordinate (c) and a time point (to or ti) to a voxel value.

According to an embodiment, the parametric function is optimized for a batch of voxels in parallel, and the optimization term comprises the sum and/or mean of the absolute values of the differences between the voxel values relating to the first image coordinate at the first time point and the voxel values relating to the second image coordinate at the second time point, of all voxels in the batch. The batch may for example comprise a subset of 10 to 1000 pairs of voxels, preferably 50 to 500 pairs of voxels, more preferably 80 to 300 pairs of voxels. A pair of voxels in particular denotes a voxel of the first image frame and the corresponding voxel of the second image frame, of which voxels' voxel values the difference is calculated. A batch of 80 to 300 pairs of voxels may be particularly time efficient. During optimization a loss vector, comprising the differences of the pairs of voxel values of the batch may be used for optimizing, in particular such that a scalar value is calculated from the vector in order to determine the absolute value of the overall difference. The scalar value may, for example, be the mean or sum of the absolute values of the differences of the individual pairs of voxels. The batch of voxels may be processed in parallel, for example by applying a matrix multiplication. The voxels may be distributed to batches randomly. Preferably, all the voxels are attributed to one or several batches. Advantageously this embodiment may allow to apply a parallelisation of the training. Parallelisation of the training may allow for a faster processing of the data.

According to an embodiment, the method includes a further step of performing motion correction of the second image frame, by adding the motion vector field to a plurality or all of the first image coordinates, and obtaining the voxel values relating to the second image coordinates at the second time point, in particular by applying the interpolator function. Advantageously, the motion vector field may thus be used to register the second image frame to the first image frame.

According to an embodiment, in addition to the image data of the first and second image frame, image data for one or multiple further image frames are provided, wherein the parametric function is optimized for the image data of each further image frame at further time points in the same way as for the image data of the second image frame, in particular a motion vector field is generated for the data of each further image frame with respect to the data of the first image frame in order to generate motion corrected further image frames. Hence, multiple image frames may be registered to a reference frame, namely the first image frame. Accordingly, for example, the inventive method may be applied to a series of images in order to uniformly register these images.

According to an embodiment an average of the first image frame and the motion corrected second image frame and/or further image frames is calculated in order to generate averaged image data. Averaged image data may in particular lead to higher-quality images with better signal-to-noise ratio. Hence the inventive method may thus be applied to achieve a more reliable and/or more precise averaging of image data. Tests have shown, that with this embodiment sharp features in the image data may be preserved more distinctly with when compared to a state-of-the-art image registration, while, at the same time, much better averaging may be provided in flat areas. For example, a subject's, e.g., a patient's, movement, during brain imaging may be compensated. In particular, the multiple image frames of an MRI measurement, e.g., of an MRI measurement of the human brain, may be averaged.

According to an embodiment, the first and second image frame, and optionally further image frames, have been measured consecutively. Hence, the method may be applied to consecutively acquired image frames. The first image frame does not necessarily have to be the image frame that has been measured before the other image frames, i.e., measured as the first image frame. For example, the first image frame may have been measured in the middle of the other image frames with respect to the time point.

According to an embodiment, the image data are medical image data taken consecutively from a patient and the motion correction is applied such that motion during a periodic movement cycle, in particular a breathing cycle, is compensated. Hence, as one option, the inventive method may be applied to compensate for motion of parts of a subject, e.g., an organ of a patient. For example, the movement during liver imaging may be compensated.

According to another aspect, a computer-readable storage medium, in particular a non-transient computer-readable storage medium, is provided having stored thereon a computer program with instructions that when carried out on a processing unit will cause the processing unit to carry out the method as described herein.

According to another aspect, a processing unit being configured to carry out the method as described herein is provided. The processing unit may comprise a computer-readable storage medium, on which instructions to carry out the method as described herein are stored. The processing unit may be or may comprise, for example, a computer, such as a personal computer, a cloud computer, a server. Additionally, and/or alternatively, the processing unit may be the processing unit of an imaging system.

The features and advantages of different embodiments can be combined. The features and advantages of one aspect of the invention, e.g., the method, may be applied to the other aspects, e.g., the non-transient computer readable medium and the processing unit, and vice versa.

These and other aspects of the invention will be apparent from and elucidated with reference to the embodiment(s) described hereinafter.

BRIEF DESCRIPTION OF THE DRAWINGS

The invention shall now be illustrated by means of embodiments with reference to the attached drawings, in which:

Fig. 1 shows a flow diagram of a method in accordance with an embodiment of the invention,
Fig. 2 shows a flow diagram of a method in accordance with another embodiment of the invention,
Fig. 3 shows a flow diagram of a method in accordance with another embodiment of the invention,
Fig. 4 shows a schematic representation of a neural network that may be used in a method in accordance with an embodiment of the invention,
Fig. 5 shows a flow diagram of a method in accordance with another embodiment of the invention,
Fig. 6 shows a comparison of averaged image data registered by another algorithm and by a method according to an embodiment of the invention as well as an individual scan,
Fig. 7 shows a representation of the motion field of four image frames corresponding to four different time points created with a method according to an embodiment of the invention, and
Fig. 8 shows a schematic representation of a processing unit according to an embodiment of the invention.

DESCRIPTION OF EMBODIMENTS

Throughout the figs, the same or corresponding features/elements of the various embodiments are designated with the same reference numbers.

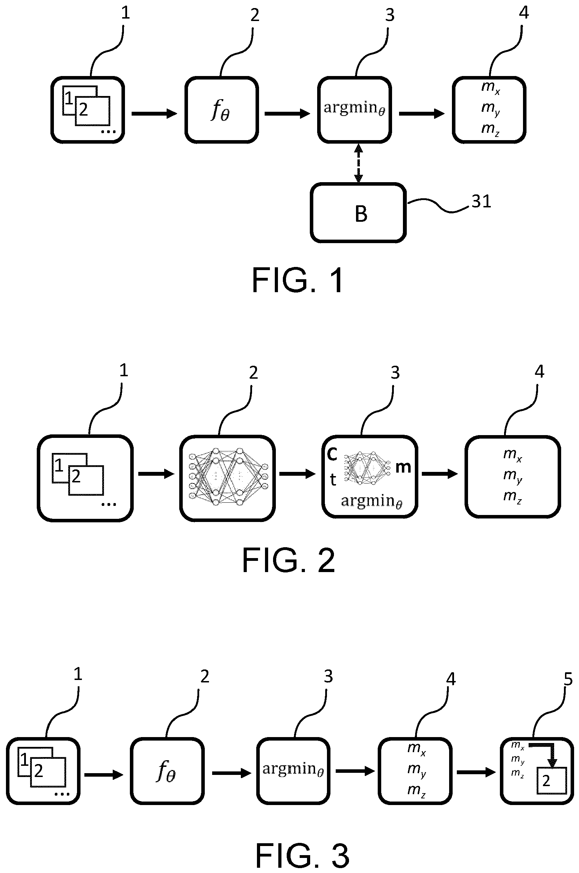

Fig 1 shows a flow diagram of a computer-implemented method in accordance with an embodiment of the invention. In one step 1, image data is provided to a processing unit that is configured to carry out the method. The image data comprise at least two image frames, including a first image frame and a second image frame, and a plurality of voxels. Voxels in the context of this invention may also comprise two-dimensional pixels. Individual voxels respectively comprise a voxel value relating to an image coordinate, e.g., denoted as $c$, and a time point, e.g., denoted by $t_0$, $t_1$, etc or t0, t1, etc. The image coordinate may for example be described by a vector of the form

$$c = \begin{pmatrix} x \\ y \\ z \end{pmatrix}.$$

A first time point to corresponds to the first image frame and a second time point $t_1$ corresponds to the second image frame. The method may be applied to multiple image frames. In the following steps, additional image frames, e.g., $t_2$, $t_3$..., may all be treated analogously to image frame $t_1$, i.e., their motion field vector may be determined with reference to the first image frame, corresponding to to.

In a further step 2, an initial parametric function $f_\theta$ is generated. The parametric function may be any function that generates an output from an input, wherein the input of the parametric function is one image coordinate, in this example denoted as $c$, and optionally two time points, here denoted $t_1$ and $t_2$, and the output of the parametric function is a motion vector, here denoted as $m$, and which output is created as response to the input. The parametric function further comprises one or several adaptable parameters which is/are denoted as $\theta$ in this example. Initially, $\theta$ may be set to a predetermined initial value, e.g. zero.

In a further step 3, the parametric function is optimized by optimizing an optimization term and adapting $\theta$. The optimization term may be of the form

$$\left| \mathbf{h}(t_0, \mathbf{c}) - \mathbf{h}(t_1, \mathbf{c} + \mathbf{m}) \right|$$

wherein $\mathbf{h}$ is the image data, $t_0$ is the first time point, $t_1$ is the second time point, c is a vector describing the image coordinates. $\mathbf{h}(t_0, \mathbf{c})$ and $\mathbf{h}(t_1, \mathbf{c})$ are the image data at specific times and image coordinates, i.e., the voxel values. For example, $\mathbf{h}$ may denote grey scale values. Furthermore, m is the motion vector (field) as well as the output of the parametric function $f_\theta$:

$$\mathbf{m} = f_\theta(\mathbf{c}, t_0, t_1).$$

The optimization term comprises a difference between the voxel value, $\mathbf{h}(t_0, \mathbf{c})$, at a first image coordinate, $\mathbf{c}$,

and at the first time point, $t_0$ and the voxel value, $\mathbf{h}(t_1, \mathbf{c} + \mathbf{m})$, at a second image coordinate, $\mathbf{c} + \mathbf{m}$, at the second time point, $t_1$, wherein the second image coordinate is obtained by adding the motion vector, $\mathbf{m}$, to the first image coordinate, $\mathbf{c}$. In particular the optimization term may be optimized by minimizing the absolute value of this term for all c, to and $t_1$:

$$\forall c, t_0, t_1: \operatorname{argmin}_\theta \left( \left| \mathbf{h}(t_0, \mathbf{c}) - \mathbf{h}(t_1, \mathbf{c} + \mathbf{m}) \right| \right).$$

During optimization, the optimization term is calculated for a plurality of voxels at the first and second time points and the parametric function is adapted iteratively by adapting θ such that the absolute value is minimized. In this example, the first image frame serves as a reference for calculating the motion vector field of the second image frame. It should be noted that it is possible to not only use the first image frame, corresponding to $t_0$, as a reference, but that, alternatively any other image frame, in particular any image frame in a sequence of image frames, may be used as reference. For example, $t_2$, $t_5$ or $t_n$ may be used as reference.

Optionally, the optimization term may comprise a regularization term $\alpha R(\mathbf{f})$. such that the optimization term is

$$\left| \mathbf{h}(t_0, \mathbf{c}) - \mathbf{h}(t_1, \mathbf{c} + \mathbf{m}) \right| + \alpha R(\mathbf{m}).$$

The regularization term may, for example, be the L1 or L2 norm of the motion field, and it is adjusted by a pre-factor $\alpha$, which may preferably have a low value, such as 0.0001.

Optionally, during optimization, an interpolator function B may be applied to the voxel value $\mathbf{h}(t_1, \mathbf{c} + \mathbf{m})$ ,see optional step 31, such that the optimization term takes the form

$$\left| \mathbf{h}(t_0, \mathbf{c}) - B\big( \mathbf{h}(t_1, \mathbf{c} + \mathbf{m}) \big) \right|$$

or

$$\left| \mathbf{h}(t_0, \mathbf{c}) - B(\mathbf{h}(t_1, \mathbf{c} + \mathbf{m})) \right| + \alpha R(\mathbf{m})$$

when also adding the regularization term. Since the image data consist of a finite number of voxels values, adding the motion field vector $\mathbf{m}$ to the first image coordinate $\mathbf{c}$ may lead to an image coordinate position $\mathbf{c} + \mathbf{m}$ which lies in between the voxels of the actual image data. An easy and possible solution may be to simply take the voxel value of the nearest voxel and define this as the voxel value at $\mathbf{c} + \mathbf{m}$. However, it may be more accurate, to interpolate the voxel value from at least the two nearest voxel values with the interpolator function B. Accordingly, the difference between the first and second voxel values is calculated such that the second voxel value is an interpolated value. For example, the interpolation may comprise averaging the voxel values of the three or four or eight nearest voxel values or another predefined number of nearest voxel values. The averaging may be a weighted averaging taking into account the distance of the second image coordinate $\mathbf{c} + \mathbf{m}$ from the nearest voxel values, such as an inverse distance weighting. For example, in the case of considering four nearest voxel values having distances d1, d2, d3 and d4, each voxel value n=1,2,3,4 may be weighted dn/(d1+d2+d3+d4), where dn is the distance of the corresponding voxel value from the second image coordinate $\mathbf{c} + \mathbf{m}$ . Thus, in this example, the weighting may be done according to

$$B = \frac{v1 \times d1 + v2 \times d2 + v3 \times d3 + v4 \times d4}{d1 + d2 + d3 + d4},$$

where v1, v2, v3, v4 are the voxel values of the four nearest voxels. Alternatively, the weighting may, for example, be done according to dn/(d1+d2+d3+d4)$^2$ for each voxel value vn, thus assigning more weight to the closer voxel values. The interpolator function may be applied to any embodiment described herein, in particular to the embodiments described in figs 2, 3 and 5. In particular in the case of two-dimensional image data, the interpolation function may be bilinear or bicubic.

In a further step 3, a motion vector field

$$\mathbf{m} = f_\theta(\mathbf{c}, t_0, t_1) = \begin{pmatrix} m1 \\ m2 \\ m3 \end{pmatrix}$$

is generated by applying the optimized parametric function $f_\theta$ to the image coordinates. Accordingly, for each image coordinate the parametric function is applied to, a vector of the form $\mathbf{m}$ may be generated. The motion vector field may thus be a matrix describing a motion shift for each coordinate c at time $t_1$, $t_1$ here denoting image data from the second image frame, which has been calculated with respect to the first image frame, denoted by to. If the method is applied to more than two image frames, such a matrix and/or the motion vector field may be generated and optimized/adapted for multiple time points $t_n$, e.g., each time point corresponding to one of the image frames, each motion field of each image frame preferably being calculated with respect to the same reference frame or first frame. The parametric function $f_\theta$ may be any suitable parametric function analogous to parametric functions known in the state of the art. For example, an approach analogous as disclosed in https://alexyu.net/plenoxels/ may be applied.

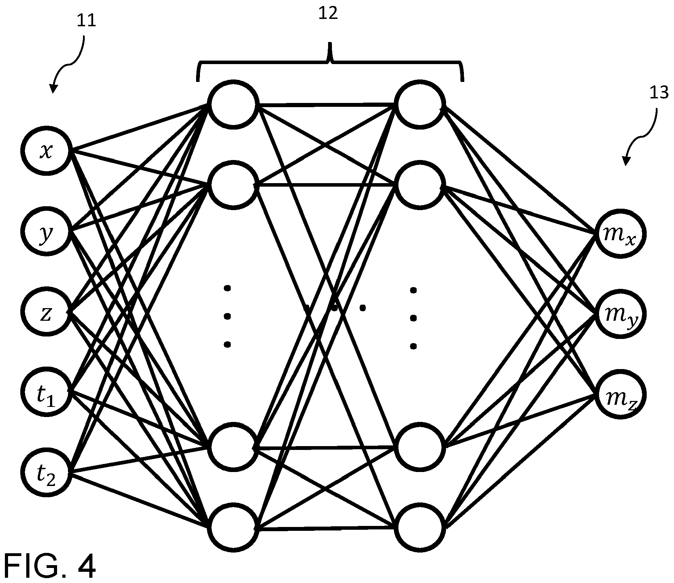

Fig 2 shows a flow diagram of a method in accordance with another embodiment of the invention. The general principle in this embodiment is analogous to the one described with respect to fig 1. The main difference is, that in this case, the parametric function $f_\theta$ provided in the second step 2 is a neural network, preferably with a multi-layer perceptron architecture. An embodiment of a neural network that may be applied here is shown in fig 4. Further, the step 3 of optimizing the parametric function comprises training the neural network. The optimizing may be done as described with respect to the embodiment in fig 1, in particular including minimizing the optimization term. Hence, the image coordinates **c,** and optionally the time points, e.g., $t_0$, $t_1$, are input into the neural network and the output of the neural network is the motion vector field **m.** The parameters that are adapted during optimizing are in particular the weights of the neural network. The neural network may be trained by a gradient descent method, wherein each parameter of the neural network is partially differentiated with respect to the optimization term in each iteration.

Fig 3 shows a flow diagram of a method in accordance with another embodiment of the invention. The first four steps 1-4 may correspond to the method described in figs 1 or 2. Additionally, there is a furthers step 5, in which a motion correction of the second image frame, corresponding to $t_1$, or of any further image frames, i.e., corresponding to $t_2$, $t_3$, etc. is performed. Therein the motion vector field is added to some, preferably all, of the first image coordinates of the second (or further) image frame, thus calculating the second image coordinates, and the corresponding voxel values relating to the second image coordinates at the second time point are obtained. Preferably, the interpolator B function may be applied in order to determine interpolated voxel values at the second image frame.

Fig 4 shows a schematic representation of a neural network that may be used as the parametric function $f_\theta$ in a method in accordance with an embodiment of the invention. In this embodiment, there are ten hidden layers 12 with 256 neurons per layer. An input layer 11 is configured such that the image coordinates (x, y and z) as well as two time points corresponding to a first image frame ($t_1$) and to a second image frame ($t_1$) can be input into the neural network. In particular when registering only two image frames, i.e., the first and the second image frame, the input of two time points may optionally be omitted, since an assignment of the image coordinates to particular times may not be necessary in this case. An output layer 13 is configured to output the motion vector values ($m_x$, $m_y$, $m_z$) of the motion field **m.** In the case of two-dimensional data, the input and output may comprise two image coordinates (e.g., x, y) and two motion vector values (e.g., $m_x$, $m_y$,). Circles indicate neurons and lines indicate weights, i.e., connections between the neurons. The weights correspond to the parameters $\theta$ of the parametric function $f_\theta$ that are adapted during the optimization step 3 (see figs 1-3 or 5). The neural network may be optimized for inputting a batch of voxels in parallel. For example, 200 pairs of voxels may be input at the same time. In this case, the optimization term may comprise the sum and/or mean of the absolute values of the differences between the voxel values relating to the first image coordinate at the first time point and the voxel values relating to the second image coordinate at the second time point, of all voxels in the batch. Hence, the optimization term may, for example, have the form

$$\sum_b |\mathbf{h}(t_0, \mathbf{c}_b) - \mathbf{h}(t_1, \mathbf{c}_b + \mathbf{m}_b)| + \alpha R(\mathbf{m}_b),$$

such that the sum (or average) is calculated over all absolute values of the differences corresponding to alle the voxels of one batch (b denoting the individual voxels of the batch).

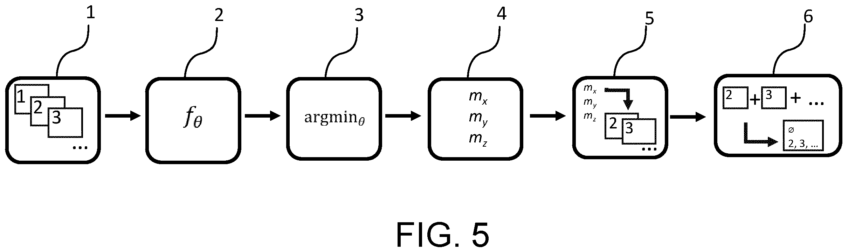

Fig 5 shows a flow diagram of a method in accordance with another embodiment of the invention. The first five steps 1-5, may be the same as in the embodiment shown in fig 3. Notably, in addition to the first and second image frame, there is provided image data for at least one further image frame. Accordingly, in the optimizing step 3, the parametric function is optimized for the image data of each further image frame at further time points in the same way as for the image data of the second image frame. In the next step 4, a motion vector field is generated for the data of each further image frame with respect to the data of the first image frame in addition to the motion vector field generated for the second image frame. Additionally, there is a further step 6, in which wherein an average of the first image frame and the motion corrected second image frame further image frame(s) is calculated in order to generate averaged image data.

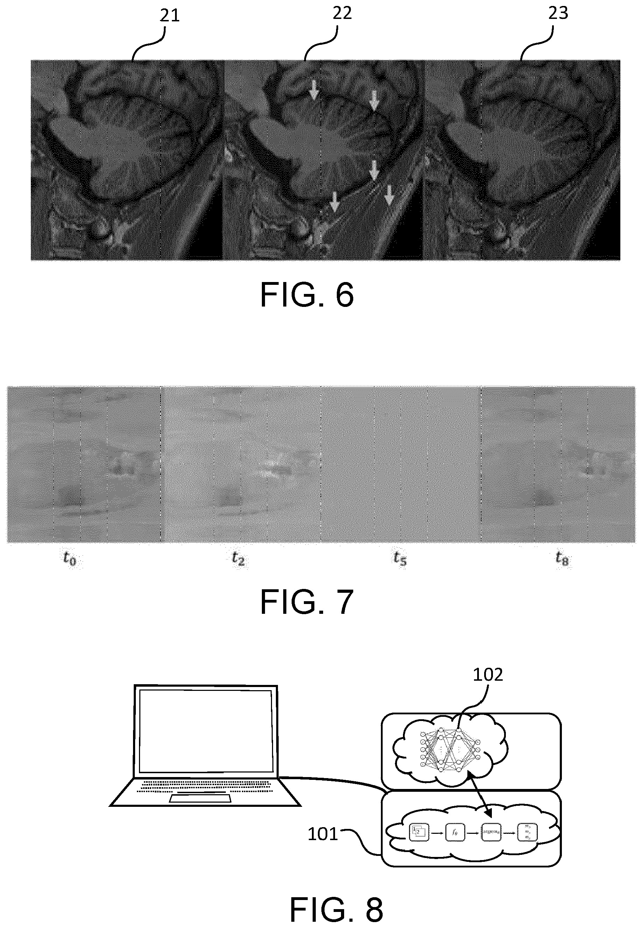

Fig 6 shows a comparison of averaged image data registered by another algorithm 21 and by a method according to an embodiment of the invention 22. For comparison, an individual scan 23 is also shown. The image in the middle 22 has been obtained after applying a method according to an embodiment of the invention to a set of five image frames obtained by magnetic resonance imaging (MRI). After the optimization step and motion correction via the motion vector field, the image data of the five motion corrected image frames is averaged such that an averaged MRI image is obtained. This image can be compared to the image on the left side 21 where image registration has been done via a FAIS algorithm (see https://jcmr-online.biomedcentral.com/articles/10.1186/1532-429X-18-S1-P32) prior to averaging the image frames. Five differences between the results are marked with arrows showing that the image with the inventive method preserves sharp features. To verify that the sharp features are present in the individual image, an individual scan 23 is provided. At the same time, much better averaging is provided in flat areas in the image 22 registered according to the inventive method (see in particular the central part, which appears a lot less grainy).

Fig 7 shows a representation of the motion field of four image frames corresponding to four different time points, namely $t_0$, $t_2$, $t_5$ and $t_8$, created with a method according to an embodiment of the invention. The motion fields have been calculated in order to compensate for breathing motion in liver imaging during the breathing cycle. The frames are registered to $t_5$, i.e., $t_5$ is the reference frame corresponding to the "first image frame" of the inventive method. Accordingly, the motion field corresponding $t_5$ is mostly grey, corresponding to no or barely any motion correction being applied to the corresponding image frame.

Fig 8 shows a schematic representation of a processing unit according to an embodiment of the invention. The processing unit comprises a computer-readable storage medium 101 having stored thereon a computer program with instructions that when carried out on the processing unit will cause the processing unit to carry out an embodiment of the method according to the invention. Notably, the processing unit also comprises a neural network 102 which is adapted by the processing unit during the step of optimizing and used to generate the motion vector field.

The above-discussion is intended to be merely illustrative of the present system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

REFERENCE SIGNS

| 1-6 | method steps |
| --- | --- |
| 11 | input layer |
| 12 | hidden layers |
| 13 | output layer |
| 21 | image data registered by a state-of-the-art algorithm |
| 22 | image data registered according to an embodiment of the invention |
| 23 | image data of an individual scan |
| 101 | computer-readable storage medium |
| 102 | neural network |

**Claims**

1. A computer-implemented method for non-rigid registration of at least two image frames of an object with one another by estimating one or several motion vector field(s) describing the displacement between two of the image frames, the method comprising the steps of:

(a) providing image data comprising a plurality of voxels, each voxel comprising a voxel value relating to an image coordinate and a time point, wherein a first time point corresponds to a first image frame and a second time point corresponds to a second image frame;

(b) generating an initial parametric function, wherein the input of the parametric function is one image coordinate and optionally two time points, and the output of the parametric function is a motion vector;

(c) optimizing the parametric function by optimizing an optimization term, wherein the optimization term comprises a difference between the voxel value at a first image coordinate and at the first time point, and the voxel value at a second image coordinate at the second time point, wherein the second image coordinate is obtained by adding a motion vector to the first image coordinate, wherein the added motion vector is the output of the parametric function when inputting the first image coordinate and optionally the first and second time point, and wherein the parametric function is optimized by calculating the optimization term for a plurality of voxels at the first and second time points and iteratively adapting the parametric function;

(d) generating a motion vector field by applying the optimized parametric function to a plurality or all of the image coordinates.

2. The method according to claim 1, wherein the parametric function is a neural network (102), in particular a neural network (102) with a multi-layer perceptron architecture, and wherein the step of optimizing the parametric function comprises training the neural network (102).

3. The method according to claim 2,
wherein the neural network (102) is trained during the optimizing step by a gradient descent method, wherein each parameter of the neural network (102) is partially differentiated with respect to the optimization term in each iteration.

4. The method according to any one of the preceding claims,
wherein, when calculating the optimization term, the voxel value relating to the second image coordinate at the second time point is obtained by applying an interpolator function, wherein the interpolator function is configured to interpolate from the one or several voxel values of the voxels in the second image frame which are nearest to the image coordinate obtained by adding the motion vector to the first image coordinate.

5. The method according to any one of the preceding claims,
wherein the optimization term comprises the absolute value of the difference between the voxel value relating to the first image coordinate at the first time point and the voxel value relating to the second image coordinate at the second time point, i.e. to the first image coordinate displaced by the motion vector.

6. The method according any one of the preceding claims,
wherein the optimization term comprises a regularization term on the magnitude of the motion vector, wherein the regularization term preferably comprises a norm of the motion vector, in particular the L1 or L2 norm of the motion vector.

7. The method according to any one of the preceding claims,

wherein the optimization term is

$$\left| \mathbf{h}(t_0, \mathbf{c}) - \mathrm{B}(\mathbf{h}(t_1, \mathbf{c} + \mathbf{m})) \right| + \alpha R(\mathbf{m})$$

wherein $\alpha R(\mathbf{f})$ is a regularization term with a pre-factor $\alpha$, $\mathbf{h}$ is the image data, $t_0$ is the first time point, $t_1$ is the second time point, B is the interpolator function, $\mathbf{c}$ is a vector describing the image coordinates and $\mathbf{m}$ is the motion vector and is the output of the parametric function $f_\theta$:

$$\mathbf{m} = f_\theta(\mathbf{c}, t_0, t_1).$$

8. The method according to any one of the preceding claims,
wherein the parametric function is optimized for a batch of voxels in parallel, and the optimization term comprises the sum and/or mean of the absolute values of the differences between the voxel values relating to the first image coordinate at the first time point and the voxel values relating to the second image coordinate at the second time point, of all voxels in the batch.

**9.** The method according to any one of the preceding claims,
including a further step of performing motion correction of the second image frame, by adding the motion vector field to a plurality or all of the first image coordinates, and obtaining the voxel values relating to the second image coordinates at the second time point by applying the interpolator function.

**10.** The method according to claim 9,

wherein, in addition to the image data of the first and second image frame, image data for one or multiple further image frames are provided,
wherein the parametric function is optimized for the image data of each further image frame at further time points in the same way as for the image data of the second image frame, in particular a motion vector field is generated for the data of each further image frame with respect to the data of the first image frame in order to generate motion corrected further image frames.

**11.** The method according to any one of claims 9 or 10,
wherein an average of the first image frame and the motion corrected second image frame and/or further image frames is calculated in order to generate averaged image data.

**12.** The method according any one of the preceding claims,
wherein the image data are medical image data taken consecutively from a patient and the motion correction is applied such that motion during a breathing cycle is compensated.

**13.** A non-transient computer-readable storage medium (101) having stored thereon a computer program with instructions that when carried out on a processing unit will cause the processing unit to carry out the method according to any one of the preceding claims.

**14.** A processing unit being configured to carry out the method according to any one of claims 1-12.

FIG. 1

FIG. 2

FIG. 3

FIG. 4

FIG. 5

FIG. 6

$t_0$          $t_2$          $t_5$          $t_8$

FIG. 7

FIG. 8

**EUROPEAN SEARCH REPORT**

Application Number

EP 22 21 2885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG QIAOYING ET AL: "Dynamic MRI Reconstruction with Motion-Guided Network", PROCEEDINGS OF MACHINE LEARNING RESEARCH, vol. 102, 10 July 2019 (2019-07-10), pages 275-284, XP055835161, | 1-7,9, 10,13,14 | INV. G06T7/20 G06T5/00 |
| Y | * abstract * * section 2 * * figure 2 * | 8,11,12 | |
| Y | SAM MCCANDLISH ET AL: "An Empirical Model of Large-Batch Training", ARXIV.ORG, CORNELL UNIVERSITY LIBRARY, 201 OLIN LIBRARY CORNELL UNIVERSITY ITHACA, NY 14853, 14 December 2018 (2018-12-14), XP080993368, * abstract * * sections 1, 2.2, A.2, A.4 * | 8 | |
| Y | HONG JUNG ET AL: "Motion estimated and compensated compressed sensing dynamic magnetic resonance imaging: What we can learn from video compression techniques", INTERNATIONAL JOURNAL OF IMAGING SYSTEMS AND TECHNOLOGY, WILEY AND SONS, NEW YORK, US, vol. 20, no. 2, 18 May 2010 (2010-05-18), pages 81-98, XP071750853, ISSN: 0899-9457, DOI: 10.1002/IMA.20231 * page 86 * * figure 6 * | 11 | TECHNICAL FIELDS SEARCHED (IPC) G06T |

-/--

The present search report has been drawn up for all claims

| Place of search | Date of completion of the search | Examiner |
|---|---|---|
| Munich | 24 May 2023 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JUN LV ET AL: "Respiratory motion correction for free-breathing 3D abdominal MRI using CNN-based image registration: a feasibility study", BRITISH JOURNAL OF RADIOLOGY., 31 January 2018 (2018-01-31), page 20170788, XP055468742, GB ISSN: 0007-1285, DOI: 10.1259/bjr.20170788 * page 1 * * section "Motion modelling" * * figures 1, 2 * | 12 | |

TECHNICAL FIELDS
SEARCHED      (IPC)

The present search report has been drawn up for all claims

| Place of search | Date of completion of the search | Examiner |
|---|---|---|
| Munich | 24 May 2023 | Katartzis, Antonios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

**EP 4 386 669 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MÜLLER, THOMAS et al.** Instant neural graphics primitives with a multiresolution hash encoding. *arXiv preprint arXiv:2201.05989,* 2022

- **D. KINGMA ; J. BA.** Adam: A Method for Stochastic Optimization. *arXiv: 1412.6980,* June 2014